(19) Europäisches Patentamt
European Patent Office
Office européen des brevets

(11) Veröffentlichungsnummer: **0 192 214**
**A2**

(12) # EUROPÄISCHE PATENTANMELDUNG

(21) Anmeldenummer: 86101983.4

(22) Anmeldetag: 17.02.86

(51) Int. Cl.⁴: C 08 L 71/04
C 08 L 61/14, C 08 L 51/00
C 08 K 5/13, C 08 K 5/49
C 08 F 283/00

(30) Priorität: 22.02.85 DE 3506193

(43) Veröffentlichungstag der Anmeldung:
27.08.86 Patentblatt 86/35

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Münch, Volker, Dr.
Luitpoldstrasse 114
D-6700 Ludwigshafen(DE)

(72) Erfinder: Czauderna, Bernhard, Dr.
Kapellenweg 34
D-6945 Hirschberg(DE)

(72) Erfinder: Echte, Adolf, Dr.
Leuschnerstrasse 42
D-6700 Ludwigshafen(DE)

(72) Erfinder: Hambrecht, Jürgen, Dr.
Werderstrasse 30
D-6900 Heidelberg(DE)

(54) **Halogenfreie, selbstverlöschende thermoplastische Formmasse.**

(57) Die Erfindung betrifft eine halogenfreie, selbstverlöschende thermoplastische Formmasse, bestehend aus:

(A) einem halogenfreien thermoplastischen Harz in einem Anteil von 30 bis 95 Gew.%,

(B) 1 bis 70 Gew.% eines Phenol-Aldehyd-Harzes (Novolak),
das durch Umsetzung mit mindestens einer eine ethylenische Doppelbindung aufweisenden Gruppe modifiziert worden ist und wobei ferner das so modifizierte Phenol-Aldehyd-Harz in an sich bekannter Weise mit einem Gemisch aus mindestens einem monovinylaromatischen Monomeren mit 6 bis 9 C-Atomen und Acrylnitril einer Pfropfpolymerisation unterworfen worden ist,

(C) 0 bis 50 Gew.% einer Stickstoff enthaltenden organischen Verbindung,

(D) 1 bis 50 Gew.% mindestens einer Phosphor enthaltenden Verbindung, und

(E) 3 bis 15 Gew.% mindestens eines phenolischen Antioxidans.

Die Formmasse wird vorzugsweise zur Herstellung von Formteilen verwendet.

EP 0 192 214 A2

Halogenfreie, selbstverlöschende thermoplastische Formmasse

Die Erfindung betrifft eine halogenfreie, selbstverlöschende plastische Formmasse, die aus einem halogenfreien thermoplastischen Harz, einem Phenol-Aldehydharz (Novolak) und einer Phosphor enthaltenden Verbindung aufgebaut ist.

Folgende Standardwerke beschreiben die Flammfestausrüstung von Thermoplasten:

Vogel, "Flammfestmachen von Kunststoffen", Hüthig-Verlag, Heidelberg (1966), Seiten 94 bis 102,

Troitzsch, "Brandverhalten von Kunststoffen", Hanser-Verlag, München (1982), Seiten 1 bis 65,

Hirschler, in "Developments in Polymer Stabilization", Band 5, Editor G. Scott, Applied Science Publishers, London (1982), Seiten 107 bis 151.

Man weiß daraus z.B., daß bei Anwendung verhältnismäßig großer Mengen an Halogen enthaltenden Flammschutzmitteln und unter gleichzeitiger Anwendung von Synergisten, wie Verbindungen des Phosphors, Arsens, Antimons, Wismuts, Bors oder des Zinns Thermoplaste nach dem Beflammen mit einer heißen Flamme nichtbrennend abtropfen und von selbst verlöschen. Ferner ist bekannt, daß dieser Effekt des Selbstverlöschens ohne die Anwendung eines Synergisten erst nach Zugabe einer weitaus größeren Menge an Halogen enthaltenden Flammschutzmitteln eintritt.

Außer der oben aufgeführten Möglichkeit, thermoplastische Kunststoffe mit Halogen enthaltenden Flammschutzmitteln auszurüsten, gibt es auch die Möglichkeit eines halogenfreien Flammschutzes.

Zum Stand der Technik nennen wir:

(1) DE-OS 30 25 139
(2) P 34 01 835.2
(3) P 34 32 750.9
(4) P 34 32 749.5

In (1) werden Phenol/-Formaldehyd-Harze als wenig wirksam bei der Flammfestmachung von Thermoplasten beschrieben.

Eine gewisse Verbesserung wird durch die Anwendung von Gemischen aus Phenol/Formaldehyd-Harzen, Stickstoff enthaltenden Verbindungen, z.B.

Vo/P

Melamin und Phosphorverbindungen in (2) erzielt. Gemische aus Poly(2,6-dimethyl-1,4-phenylen)ether, Pfropfcopolymeren aus Vinyloligomeren als Pfropfgrundlage und Poly(2,6-dimethyl-1,4-phenylen)ether als Seitenketten, Phosphorverbindungen und ggf. Phenol/Formaldehyd-Harzen werden für Styrol-Acrylnitril-Copolymeren (SAN) und für Styrol-Acrylnitril-Butadien-Pfropfcopolymeren (ABS) vorgeschlagen, vgl. (3) und (4). Aber auch diese Mischungen besitzen gewisse Nachteile: So erniedrigen die Mischungen aus (2) u.A. die Wärmeformbeständigkeit und die Zähigkeit von ABS, während die Herstellung der Mischungen nach (3) bzw. (4) eine so hohe Verarbeitungstemperatur erfordert, so daß es u.U. zu einer Schädigung der Kautschukkomponente und damit zu einem Zähigkeitsverlust kommen kann.

Es bestand daher die Aufgabe, halogenfreie Formmassen zu entwickeln, bei denen die vorgenannten Nachteile nicht auftraten und die die Einstufung UL 94 V0 und V1 erreichen.

Zusätzlich sollen die halogenfreien Formmassen beim Brennen nicht abtropfen.

Die Aufgabe wird gelöst durch eine halogenfreie, selbstverlöschende thermoplastische Formmasse, bestehend aus, jeweils bezogen auf die Formmasse aus (A), (B), (C), (D) und (E),

(A) mindestens einem halogenfreien thermoplastischen Harz in einem Anteil von 30 bis 95 Gew.%

(B) 1 bis 70 Gew.% mindestens eines Phenol-Aldehyd-Harzes (Novolaks)

(C) 0 bis 50 Gew.% mindestens einer Stickstoff enthaltenden organischen Verbindung,

(D) 1 bis 50 Gew.% mindestens einer Phosphor enthaltenden Verbindung

dadurch gekennzeichnet, daß es sich bei dem Novolak B um einen solchen handelt, der durch Umsetzung mit mindestens einer eine ethylenische Doppelbindung aufweisende Gruppe modifiziert worden ist und wobei ferner der so modifizierte Novolak in an sich bekannter Weise mit einem Gemisch aus mindestens einem monovinylaromatischen Monomeren mit 6 bis 9 C-Atomen und Acrylnitril einer Pfropfpolymerisation unterworfen wird und daß die Formmasse außerdem

(E) 3 bis 15 Gew.% mindestens eines phenolischen Antioxidans aufweist.

Nachstehend wird der Aufbau der erfindungsgemäßen Formmasse aus den Komponenten und deren Herstellung beschrieben.

Am Aufbau der Formmasse sind die Komponenten A bis E beteiligt. D.h. die Summe dieser Komponenten beträgt jeweils 100 Gewichtsteile. Jede der Komponenten A bis E ist an sich bekannt. Neu und erfinderisch ist der Vorschlag eine spezielle Komponente (B) zusammen mit den Komponenten (C) und (D) sowie einer speziell ausgewählten Komponente (E) in Verbindung mit thermoplastischen Harzen (A) anzuwenden, um zu halogenfreien, selbstverlöschenden thermoplastischen Formmassen zu gelangen.

Die erfindungsgemäße Formmasse besteht zu

1. 30 bis 95 Gew.%, insbesondere 33 bis 80 Gew.% und vorzugsweise 34 bis 60 Gew.% der Komponente A

2. 1 bis 70 Gew.%, insbesondere 10 bis 60 Gew.% und vorzugsweise 20 bis 50 Gew.% der Komponente B

3. 0 bis 50 Gew.%, insbesondere 0 bis 30 Gew.% und vorzugsweise 0 bis 10 Gew.% der Komponente C

4. 1 bis 50 Gew.%, insbesondere 2 bis 40 Gew.% und vorzugsweise 5 bis 20 Gew.% der Komponente D

und

5. 3 bis 15 Gew.%, vorzugsweise 4 bis 11 Gew.% der Komponente E.

Sie kann ferner übliche Zusatzstoffe (Komponente F) in Mengen von jeweils 0,05 bis 0,5 Gewichtsteilen, bezogen auf 100 Gewichtsteile der Formmasse aus (A) bis (E), aufweisen.

Komponente A

Die Komponente A der erfindungsgemäßen Formmasse soll wenigstens ein halogenfreies thermoplastisches, handelsübliches Harz darstellen.

Besonders bevorzugt sind übliche Copolymerisate von Styrol und Acrylnitril, sowie übliche Pfropfmischpolymerisate von Styrolen und Acrylnitril und Kautschuken (ABS) sowie deren Abmischungen.

Der Aufbau der Komponente A der Formmasse ist in der bevorzugten Ausführungsform dreiteilig. Die Komponente A der erfindungsgemäßen Formmasse

weist als Komponente $a_1$, ein Elastomeres, in einem Anteil von 1 bis 40 Gew.%, insbesondere von 10 bis 30 Gew.%, jeweils bezogen auf A, auf. Auf diesem Elastomeren, d.h. einem Kautschuk, der eine Glastemperatur unterhalb von 0°C, insbesondere unterhalb von -30°C aufweist, ist ein Copolymerisat $a_2$ aufgepfropft, das einen Anteil von 5 bis 40 Gew.%, insbesondere von 5 bis 30 Gew.%, jeweils bezogen auf A, ausmacht. Die Summe aus $a_1$ und $a_2$, im nachfolgenden Text auch gelegentlich als Pfropfmischpolymerisat, d.h. als Ergebnis der Pfropfung bezeichnet, macht noch nicht die gesamte Komponente A aus. Die Komponente A enthält zusätzlich zu den Komponenten $a_1$ und $a_2$ noch mindestens ein Copolymerisat $a_3$ (Hartmatrix) in einem Anteil von 20 bis 94 Gew.%, insbesondere von 40 bis 85 Gew.%, jeweils bezogen auf A. Dieses Copolymerisat stellt die Hartmatrix der Formmasse dar, in der das Pfropfmischpolymerisat gleichmäßig verteilt ist.

Nachstehend wird der Aufbau der Komponenten $a_1$ bis $a_3$ des Mischpolymerisates A beschrieben.

Aufbau von $a_1$

Das Elastomere $a_1$ ist aufgebaut aus Polymerisaten konjugierter Diene, insbesondere von Buadien-1,3. Es soll eine Glastemperatur (nach K.H. Illers und H. Breuer, Kolloid-Zeitschrift 176 (1961), Seite 110) haben, die unter 0°C liegt.

Aufbau von $a_2$

Das Copolymerisat $a_2$, d.h. die Pfropfhülle, ist aufgebaut aus mindestens je einem Monomeren aus zwei unterschiedlichen Gruppen.

Die erste Gruppe stellt vinylaromatische Monomere mit 8 bis 9 C-Atomen dar, insbesondere kommen hierbei in Betracht das Styrol, sowie die Alkylderivate, von denen das α-Methylstyrol bzw. p-Methylstyrol hervorgehoben seien. Besonders bevorzugt wird das Styrol allein angewendet. Um wärmeformbeständigere Massen zu erhalten, können Mischungen aus Styrol und dessen Alkylderivaten oder ausschließlich das α-Methylstyrol und insbesondere das p-Methylstyrol angewendet werden.

Die zweite Komponente für den Aufbau des Copolymerisates $a_2$ stellt ein (nichtaromatisches) ethylenisch ungesättigtes Monomeres dar. Als solche (nichtaromatische) ethylenisch ungesättigte Monomere kommen in Betracht, insbesondere die Derivate der Acrylsäure und Methacrylsäure. Genannt seien die Ester der Acrylsäure und der Methacrylsäure mit 1 bis 8 C-Atomen im Alkylrest sowie das Acrylnitril und das Methacrylnitril. Bevorzugt

wird das (Meht)acrylnitril verwendet. Die vorstehend genannten vinylaromatischen Monomeren und die (nichtaromatischen) ethylenisch ungesättigten Monomeren werden im Gewichtsverhältnis von 60:40 bis 90:10 angewendet. Das Ergebnis der Herstellung des Copolymerisates in Gegenwart des Elastomeren $a_1$ ist ein Pfropfmischpolymerisat, bei der das Copolymerisat in dem Fachmann bekannten Mengen auf das Elastomere gepfropft wird. Die Herstellung der Pfropfhülle kann dabei gegebenenfalls in 2 Stufen erfolgen, wobei in der ersten Stufe der Pfropfung 5 bis 50 Gew.%, vorzugsweise 20 bis 40 Gew.% lediglich des vinylaromatischen Monomeren und die Gesamtmenge des (nichtaromatischen) ethylenisch ungesättigten Monomeren, d.h. 30 bis 100 Gew.%, angewendet werden.

Das Copolymerisat $a_2$ soll unabhängig davon, ob es in einer oder zwei Stufen hergestellt wird, etwa 90 bis 60 Gew.% vinylaromatische Monomere und 40 bis 10 Gew.% (nicht-aromatische) ethylenisch ungesättigte Monomere, jeweils bezogen auf $a_2$, aufweisen. Bevorzugt ist die Pfropfhülle aus 80 bis 65 Gew.% Styrol und 20 bis 35 Gew.% Acrylnitril aufgebaut.

Sowohl das Elastomere als auch das Pfropfmischpolymerisat werden bevorzugt in Emulsion hergestellt, und können nach den üblichen Methoden einer Teilchenvergrößerung unterzogen werden. Das Pfropfmischpolymerisat soll Teilchen im Bereich von 0,2 bis 10 $\mu$m ($d_{50}$-Wert der integralen Masseverteilung) aufweisen.

Aufbau von $a_3$

Die Komponente $a_3$, das Copolymerisat, ist eine nicht elastomere Hartkomponente, die aus mindestens einem vinylaromatischen Monomeren mit 8 bis 9 C-Atomen und mindestens einem (nicht-aromatischen) ethylenisch ungesättigten Monomeren aufgebaut ist.

Als vinylaromatische Monomere, die in einer Menge von 50 bis 90 Gew.%, insbesondere von 65 bis 80 Gew.%, bezogen auf $a_3$, angewendet werden, kommen in Betracht: Styrol und seine Derivate, insbesondere die Alkylderivate, wie $\alpha$-Methylstyrol bzw. p-Methylstyrol. Bevorzugt werden das Styrol und falls wärmeformbeständigere Formmassen angestrebt werden, dessen Alkylderivate angewendet.

Das nicht aromatische ethylenisch ungesättigte Monomere wird in einer Menge von 50 bis 10 Gew.%, insbesondere von 35 bis 20 Gew.%, bezogen auf $a_3$, angewendet. Als Monomere kommen in Betracht die Derivate der Acryl- und Methacrylsäure, insbesondere die Ester von Alkohlen mit 1 bis 8 C-Atome im Alkylrest, sowie die Nitrile. Das Acrylnitril bevorzugt.

Die bevorzugt als $a_3$ verwendeten Styrol/Acrylnitril-Copolymerisate sind im Handel erhältlich und können z.B. nach der Lehre der DE-AS 10 01 001 bzw. DE-PS 10 03 436 hergestellt werden. Der Molekulargewichtsbereich der Copolymerisate kann $\bar{M}_w = 10^5$ bis $\bar{M}_w = 2,5 \times 10_5$ (Gewichtsmittel $\bar{M}_w$ aus Lichtstreuung) betragen.

Die Herstellung des Pfropfmischpolymerisates ist an sich bekannt.

Das Pfropfmischpolymerisat kann im Handel bezogen werden oder es kann beispielsweise nach der in der DE-PS 12 60 135 beschriebenen Methode hergestellt werden.

Als Pfropfmischpolymerisate ($a_1 + a_2$) kommen somit z.B. in Frage:

1. 75 % Polybutadienkautschuk gepfropft mit
   25 % Styrol/Acrylnitril im Verhältnis (90/10)

2. 75 % Polybutadienkautschuk gepfropft mit
   25 % Styrol/Acrylnitril im Verhältnis (83/17)

3. 75 % Polybutadienkautschuk gepfropft mit
   25 % Styrol/Acrylnitril im Verhältnis (75/25)

4. 75 % Polybutadienkautschuk gepfropft mit
   25 % Styrol/Acrylnitril im Verhältnis (70/30)

5. 75 % eines Kautschuks aus 60 Teilen Acrylsäurebutylester und
   40 Teilen Butadien, gepfropft mit
   25 % Styrol/Acrylnitril im Verhältnis (70/30)

6. 75 % Polybutadienkautschuk gepfropft mit
   25 % Styrol/Acrylnitril im Verhältnis (65/35)

7. 60 % Polybutadienkautschuk gepfropft mit
   40 % Styrol/Acrylnitril im Verhältnis (65/35)

Besonders bevorzugt eingesetzt wird 7.

In den erfindungsgemäßen Formmassen besonders bevorzugt eingesetzte Mischungen aus Komponenten $a_3$ und $a_1 + a_2$ sind demnach Acrylnitril-Butadien-Styrol-Blockcopolymerisate (ABS).

Komponente B

Bei der Komponente ($b_1$) der Komponente (B) der erfindungsgemäßen Formmasse handelt es sich um modifizierte Phenol/Aldehyd-Harze, welche durch die Kondensation von Phenolen und Aldehyden hergestellt werden (Novolake) und danach in geeigneter Weise modifiziert werden. Besonders bevorzugt eingesetzt werden Novolake mit zahlenmittleren Molgewichten $\bar{M}_n$ von 500 bis 2000 (bestimmt durch die Dampfdruckosmometrie in Aceton) vor der Modifizierung.

Die Darstellung von Novolaken wird beispielsweise in Houben/Weyl, "Methoden der organischen Chemie", Band 14, Teilband 2, Georg Thieme Verlag, Stuttgart, 1963, Seite 201 ff. oder in Sørensen und Campbell, "Preparative Methods of Polymer Chemistry", Interscience Publishers, New York, 1968 beschrieben.

Zur Darstellung von Novolaken eignen sich Aldehyde der allgemeinen Formel R-CHO, worin R = H, $C_1$-$C_{10}$-Alkyl, Cycloalkyl oder $C_6$-$C_{12}$-Aryl- oder -Aryl-$C_1$-$C_3$-Alkyl, Heteroaromat mit Sauerstoff, Stickstoff oder Schwefel, wie beispielsweise Formaldehyd, Acetaldehyd, n-Propanal, n-Butanal, i-Propanal, i-Butyraldehyd, 3-Methyl-n-butanal, Benzaldehyd, Pyridin-2-carbaldehyd, Furfural, Thiophen-2-carbaldehyd, p-Tolylaldehyd, 2-Phenylacetaldehyd u.a.. Besonders bevorzugt eingesetzt wird Formaldehyd.

Zur Darstellung der Ausgangsstoffe für die erfindungsgemäß einzusetzenden modifizierten Novolake [Komponente ($b_1$) der Komponente (B)] eignen sich insbesondere Phenole der nachstehend beschriebenen Formel

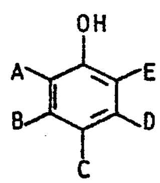

worin A und E Wasserstoffatome darstellen und B, C und D die in den allgemeinen Formeln (I) bis (X) aufgeführten und definierten Reste $R^2$, $R^3$ und $R^4$ bezeichnen oder worin A und C Wasserstoffatome darstellen und B, C und E die nachstehend bei den allgemeinen Formeln (I) bis (X) aufgeführten Reste $R^2$, $R^3$ und $R^4$ bezeichnen, einsetzt.

Charakteristische Beispiele für Phenole der allgemeinen Formel sind, ohne damit eine Einschränkung zu treffen, Phenol, o-Kresol, m-Kresol, p-Kresol, 2,5-Dimethyl-, 3,5-Dimethyl-, 2,3,5-Trimethyl-, 3,4,5-Trimethyl-, p-t-Butyl-, p-n-Octyl-, p-i-Octyl-, p-Stearyl-, p-Phenyl-, p-(2-Phenylethyl)-, o-Isopropyl-, p-Isopropyl-, m-Isopropyl-, p-Methoxi-und p-Phenoxiphenol, Brenzkatechin, Resorcin, Hydrochinon, Salicylaldehyd, p-Hydroxibenzoesäure, p-Hydroxibenzoesäuremethylester, p-Cyano- und o-Cyanophenol, p-Hydroxibenzolsulfonsäure, -sulfonsäureamid und -sulfonsäurecyclohexylester, 4-Hydroxiphenylphenylphosphinsäure und -phenylphosphinsäuremethylester, 4-Hydroxiphenylphosphonsäure, -phosphonsäureethylester und -phosphonsäurediphenylester. Bevorzugt eingesetzt werden Phenyl, o-Kresol, m-Kresol, p-t-Butylphenol, p-Octylphenol und p-Kresol.

Als Ausgangsstoffe für die Modifizierung läßt sich somit eine Klasse der Novolake eingrenzen, welche in der Polymerkette mindestens eine der Struktureinheiten I, II oder III aufweisen,

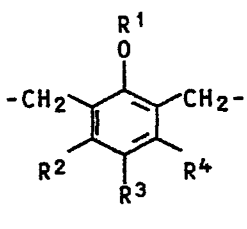
I

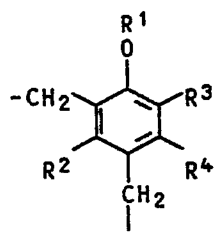
II

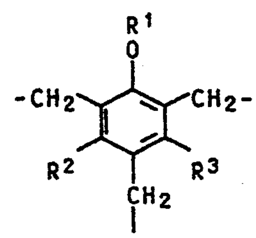
III

die mit mindestens einer Endgruppe der nachstehenden Formeln IV, V, VI, VII, VIII, IX oder X verknüpft sind

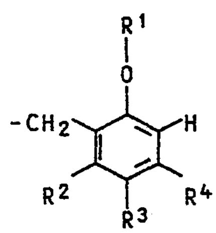
IV

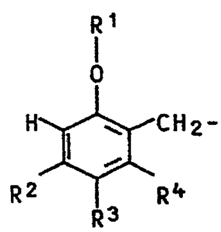
V

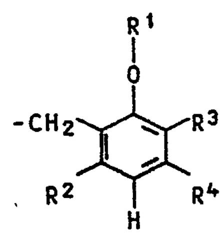
VI

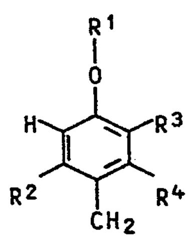
VII

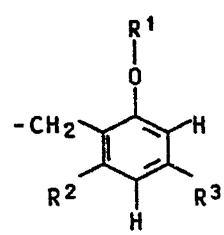
VIII

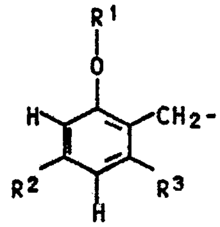 IX 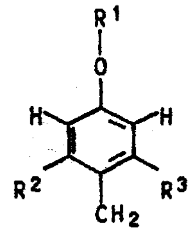 X

und wobei $R^1$ stehen kann für H-Atome und $R^2$, $R^3$ und $R^4$ gleichzeitig oder unabhängig voneinander stehen für Wasserstoff, $C_1$-$C_8$-Alkyl, $C_6$-$C_{20}$-Cycloalkyl-, $C_6$-$C_{20}$-Aryl-, $C_1$-$C_6$-Alkoxi-$C_6$-$C_{10}$-Cycloalkoxi-, $C_6$-$C_{20}$-Aryloxi-, Hydroxi-, Carbonyl-, Carboxi-, Amino-, Cyano-, Carboxamido-, Sulfonsäure-, Sulfonamido-, Phosphonsäure-, O-Phosphorsäure-, Carboxi-$C_1$-$C_6$-alkylester-, Carboxi-$C_6$-$C_{10}$-arylester-, Sulfonsäure-$C_1$-$C_6$-alkylester-, Sulfonsäure-$C_6$-$C_{10}$-arylester-, Phosphonsäure-$C_1$-$C_8$-monoalkyl- und -dialkylester-, Phosphonsäure-$C_1$-$C_6$-monoaryl- und -$C_6$-$C_{10}$-Diarylester-, Phosphorsäure-$C_6$-$C_{10}$-monoaryl- und -diarylester-, Phosphorsäure-$C_1$-$C_6$-Alkyl-$C_6$-$C_{10}$-arylester- und $\omega$-Aryl-$C_1$-$C_6$-alkylreste.

Charakteristische Beispiele für die zur Modifizierung einzusetzenden Novolake sind demnach, ohne eine Einschränkung damit zu treffen:

$N_1$: Phenol-Formaldehyd-Novolak;
$N_2$: o-Kresol-Formaldehyd-Novolak;
$N_3$: m-Kresol-Formaldehyd-Novolak;
$N_4$: p-Kresol-Formaldehyd-Novolak;
$N_5$: p-Octylphenol-Formaldehyd-Novolak;
$N_6$: p-t-Butylphenol-Novolak.

Bevorzugt werden ($N_1$), ($N_2$), ($N_3$) und ($N_4$) mit 80 bis 30 % o-o-, 50 bis 10% o-P¯ und 30 bis 5 % p-p-Verknüpfungen, wobei die Summe aller Verknüpfungen = 100 %.

Des weiteren können auch Novolake aus Phenolgemischen eingesetzt werden. Charakteristische Beispiele sind in Tabelle 1 aufgeführt. Diese Aufzählung beinhaltet keine Einschränkung.

Die Zusammensetzung der Mischungen der Phenole ist nicht kritisch und kann innerhalb der angegebenen Grenzen variieren. Es gilt für die Berechnung einer Zusammensetzung:

$$\Sigma \text{ Mol.\%} = 100.$$

0192214

Tabelle 1: Beispiele für bevorzugt eingesetzte Phenolgemische

| Bezeichnung | Nebenkomponente / Hauptkomponente | o-Kresol (Mol.%) | m-Kresol (Mol.%) | p-Kresol (Mol.%) | p-t-Butylphenol (Mol.%) | p-t-Octylphenol (Mol.%) |
|---|---|---|---|---|---|---|
| $N_7$ | Phenol | ( 5-15) | - | - | - | - |
| $N_8$ | Phenol | - | ( 8-17) | - | - | - |
| $N_9$ | Phenol | - | - | - | - | ( 4-28) |
| $N_{10}$ | o-Kresol | - | (20-40) | - | - | - |
| $N_{11}$ | o-Kresol | - | - | (10-40) | - | - |
| $N_{12}$ | o-Kresol | - | - | - | - | - |
| $N_{13}$ | o-Kresol | - | - | - | ( 8-30) | (10-45) |
| $N_{14}$ | m-Kresol | - | - | ( 5-35) | - | - |
| $N_{15}$ | p-Kresol | ( 4-32) | - | - | - | - |
| $N_{16}$ | p-t-Butylphenol | - | ( 3-40) | - | - | - |
| $N_{17}$ | p-Octylphenol | - | ( 3-45) | - | - | - |
| $N_{18}$ | Phenol | (10-40) | - | - | ( 2-15) | - |
| $N_{18}$ | Phenol | (10-20) | (30-40) | - | - | ( 5-10) |
| $N_{20}$ | Phenol | (10-40) | (15-20) | - | ( 2-10) | ( 1- 3) |
| $N_{21}$ | o-Kresol | - | (33-45) | - | - | - |
| $N_{22}$ | o-Kresol | - | ( 5-30) | - | ( 5-30) | - |
| $N_{23}$ | o-Kresol | - | - | - | - | ( 5-40) |
| $N_{24}$ | o-Kresol | - | (15-20) | - | (10-20) | - |
| $N_{25}$ | o-Kresol | - | (15-25) | - | ( 5-15) | ( 2-10) |
| $N_{26}$ | o-Kresol | - | ( 5-30) | ( 5-30) | - | - |

Ein ganz bevorzugt eingesetzter Novolak ist ($N_{28}$) mit der Zusammensetzung:

60 - 70 Mol.% o-Kresol + 15 - 20 Mol.% m-Kresol + 10 - 20 Mol.% p-Kresol.

Er enthält vorzugsweise 70 - 50 % o-o-, 30 bis 10 % o-p- und 20 - 10 % p-p-Verknüpfungen, wobei die Summe aller Verknüpfungen im Harz = 100 % und besitzt einen mittleren Polymerisationsgrad P (mittlere Anzahl der Phenylkerne in der Polymerkette) von 9,5.

Die Herstellung modifizierter Novolake (Vinylesterharze von Novolaken) ist an sich bekannt aus der EP-PS 71 167).

Der modifizierte Novolak weist auf: mindestens eine über ein Sauerstoffatom des Novolaks gebundene Gruppe der allgemeinen Stuktur

$$-X-Y-\overset{Z}{\overset{|}{C}}=CH_2 \qquad XI,$$

in der stehen für

X: = $-CHQ^1-$[mit $Q^1$ = H, $C_1$-$C_4$-Alkyl],

$-\overset{O}{\overset{\|}{C}}-$, $-\overset{O}{\overset{\|}{C}}-NH-$,

$-SiQ^2_2-$, $-PQ^2_2-$, $-BQ^2-$ [mit $Q^2$ = $C_1$-$C_4$-Alkyl, $C_6$-$C_{10}$-Aryl, $C_1$-$C_4$-Alkoxi, $C_6$-$C_{10}$-Aryloxi];

Z: = H, $C_1$-$C_4$-Alkyl, $C_4$-$C_6$-Cycloalkyl, $C_6$-$C_{10}$-Aryl,

Y: = einen zweibindigen organischen Rest, ausgewählt aus den Verbindungsklassen der Alkyle, Cycloalkyle, Aryle, welcher ggf. noch weitere funktionelle Gruppen trägt.

Für die Herstellung des modifizierten Novolaks [Komponente ($b_1$) der Komponente (B)] stehen mehrere Methoden zur Verfügung. So können die freien phenolischen OH-Gruppen der Novolake mit Verbindungen, welche Isocyanatgruppen und endständige Doppelbindungen enthalten, nach folgendem Schema 1 umsetzt werden:

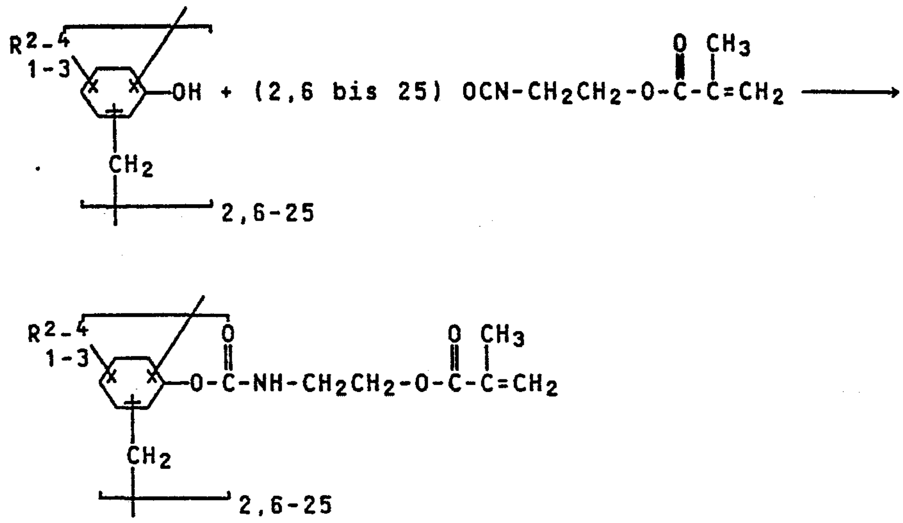


$R^{2-4}$ = den in den Ansprüchen 6 und 9 genannten Gruppen.

Eine weitere Möglichkeit zur Modifizierung ist die Umsetzung der freien phenolischen OH-Gruppen der Novolake mit Verbindungen, welche reaktive, Halogen enthaltende Gruppen und endständige Doppelbindungen enthalten, unter den Bedingungen der Schotten-Baumann-Reaktion, so wie sie beispielsweise von H. Kunz und W. Krauch in "Reaktionen der Organischen Chemie", Hüthig Verlag, Heidelberg, 1976, Seiten 27 und 28, beschrieben werden.

Ebenso ist die Umsetzung der Novolake in einem Zweiphasensystem, in Gegenwart eines Phasentransferkatalysators, wobei die OH-Gruppen tragende Verbindung in Base/Wasser vorgelegt wird, ein in der organischen und phosphororganischen Chemie übliches Verfahren. Beispiele für solche Reaktionen finden sich beispielsweise in V.K. Krishnakumar und M.M. Sharma, Synthesis (Stuttgart), Seiten 558 bis 559, 1983 oder in W.E. Keller (Editor), "Compendium of Phase Transfer Reactions and Related Synthetic Methods", Fluka A.G., CH-9470 Buchs, 1979.

Die beiden letztgenannten Verfahren werden durch das Schema 2 beispielhaft illustriert.

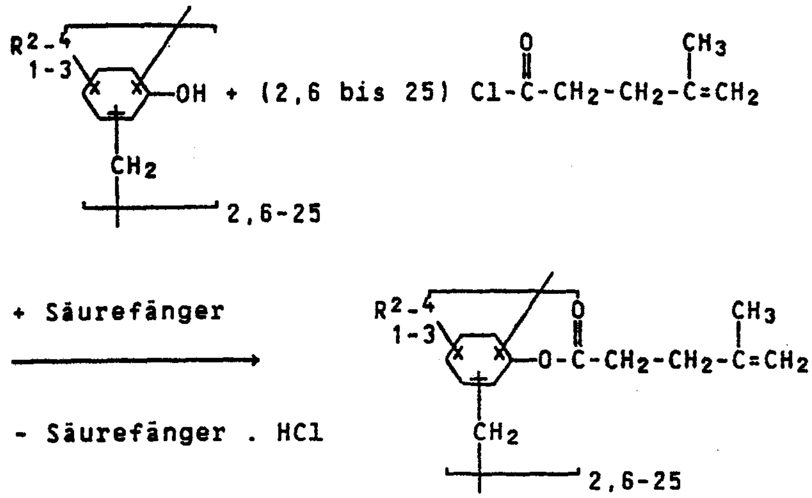


Eine dritte Möglichkeit für die Herstellung der Komponente ($b_1$) der Komponente (B) der erfindungsgemäßen Formmasse ist die Umsetzung eines Novolaks mit einem Epoxid zu einem epoxidierten Novolak und die daran anschließende Veresterung des Epoxidharzes mit einer Doppelbindungen enthaltenden Säure nach EP-PS 71 167. In einer etwas abgewandelten Form hierzu kann der Novolak auch mit einem Epichlorhydrin in Gegenwart von Natronlauge zu einem Epoxidharz umgesetzt werden, welches anschließend verestert wird.

Epoxidharze, welche hier als Zwischenstufe dienen, sind allgemein bekannt und werden z.B. in der Patentliteratur, vgl.

DE-OS 3 333 042,
US-PS 4 294 743,
DE-OS 3 315 365 und
JA-PS J5 7133 116,

eingehend beschrieben.

Für die Darstellung der besonders bevorzugt einzusetzenden Komponente ($b_1$) der Komponente (B), nämlich von Novolaken, welche mit $R^1$ = 2-Hydroxi-5-oxo-6-methyl-4-oxahept-6-en-1-yl modifiziert sind, hat sich das folgende Verfahren als besonders vorteilhaft herausgestellt: 0,2 bis 0,75 Mol pro 1 Mol phenolischer OH-Gruppe an Methacrylsäureglycidylester

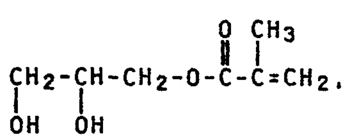

werden in Lösung oder in der Schmelze direkt den Novolaken zu den bevor-

zugten Komponenten ($b_1$) der Komponente (B) umgesetzt. Diese Verfahrensweise wird nachfolgend noch eingehend dargestellt.

Als Komponente ($b_1$) der Komponente (B) wird demnach bevorzugt der Novolak ($N_{26}$), dessen phenolische OH-Gruppen zu 25 bis 100 %, insbesondere zu 30 bis 90 % und besonders bevorzugt zu 45 bis 80 % mit 2-Hydroxi-5-oxo-6-methyl-4-oxahept-6-en-1-yl-Gruppen modifiziert sind, eingesetzt.

Bei der Komponente ($b_2$) der Komponente (B), dem aufgepfropften Polymeren, handelt es sich um mindestens ein Copolymeres aus mindestens einem vinylaromatischen Monomeren und mindestens einer Arylverbindung als zusätzlichem Comonomerem. Bevorzugt eingesetzte vinylaromatische Monomere mit 6 bis 9 C-Atomen, z.B. sind zu nennen Styrol, α-Methylstyrol und kernalkylierte Styrole. Bevorzugt wird bei letzteren p-Methylstyrol. Ein bevorzugt eingesetztes Comonomer ist Acrylnitril.

In besonders bevorzugter Ausführungsweise ist die Komponente ($b_2$) der Komponente (B) ein Vinylaromat/Acrylnitrilcopolymer, wobei das Gewichtsverhältnis von Vinylaromat zu Acrylnitril einen Bereich von 99 zu 1 bis 55 bis 45, insbesondere von 92 zu 8 bis 60 zu 40 und bevorzugt von 90 zu 10 bis 65 zu 35 umfaßt.

Dies wird erzielt, indem in an sich bekannter Weise mit einem Gemisch aus mindestens einem monovinylaromatischen Monomeren und von Acrylnitril eine Pfropfpolymerisation in Gegenwart des modifizierten Novolaks vorgenommen wird.

Erfindungsgemäß einzusetzende Komponenten ($b_2$) der Komponente (B) sind demnach
Styrol/Acrylnitril (65/35)-Copolymer,
p-Methylstyrol/Acrylnitril (80/20)-Copolymer,
p-Methylstyrol/Styrol/Acrylnitril (35/35/30)-Copolymer.

Ganz besonders bevorzugt eingesetzt wird ein Styrol/Acrylnitril (70/30)-Copolymer.

Die Aufstellung dient der Illustration der Erfindung und beinhaltet keine Einschränkung.

Die Herstellung der Komponente (B) aus den Komponenten ($b_1$), der Pfropfgrundlage und ($b_2$), der Pfropfhülle wird nach einer bevorzugten Verfahrensweise wie folgt durchgeführt:

Die Komponente ($b_1$) der Komponente (B) wird in einer Mischung der aufzupfropfenden Monomeren, deren Zusammensetzung der herzustellenden Komponente ($b_2$) der Komponente (B) entspricht, aufgelöst. Die Lösung der Komponente ($b_1$) in den Monomeren wird anschließend auspolymerisiert. In Frage kommen die üblichen Verfahren zur Suspension-, Lösungs- oder Massepolymerisation. Als Initiatoren können üblicherweise verwendete Radikalstarter, wie organische und anorganische Peroxide, C-C-aktive Starter, Cer(IV)-Salze und Redoxsysteme, ggf. in der Gegenwart von Beschleunigern, eingesetzt werden. Oder aber es kann die thermische Initiierung angewendet werden. Als Lösungsmittel kommen hochsiedende Alkylaromaten und Ether in Frage.

In bevorzugter Verfahrensweise umfaßt das Gewichtsverhältnis von Komponente ($b_1$) zur Mischung der aufzupfropfenden Monomeren einen Bereich von 90 zu 10 bis 10 zu 90, insbesondere von 30 zu 70 bis 70 zu 30 und bevorzugt einen solchen von 60 zu 40 bis 40 zu 60.

Das bevorzugt angewendete Verfahren zur Herstellung der Komponente (B) wird anhand der konkreten Beispiele

($B_1$) Pfropfcopolymer, bestehend aus 50 Gew.% Novolak ($N_{26}$), dessen phenolische OH-Gruppen zu 25 % (Σ der phenolischen OH-Gruppen = 100 %) mit Methacrylsäureglycidylester modifiziert worden sind und 50 Gew.% Styrol/Acrylnitril (70/30)-Copolymer

und

($B_2$) Pfropfcopolymer, bestehend aus 50 Gew.% Novolak ($N_{26}$), dessen phenolische OH-Gruppen zu 50 % (Σ der phenolischen OH-Gruppen = 100 %) mit Methylacrylsäureglycidylester modifiziert worden sind und 50 Gew.% Styrol/Acrylnitril (70/30)-Copolymer,

noch eingehend dargestellt. Die oben angegebenen Angaben in Gew.% beziehen sich auf die Gesamtmenge an (B).

Komponente C

Bei der gegebenenfalls angewendeten Komponente C der erfindungsgemäßen Formmasse handelt es sich um eine Stickstoff enthaltende organische Verbindung aus der Gruppe der Triazine, Triazolidine, Harnstoffe, Guanidine, Guanamine, Aminosäure und Peptide sowie ihren Salzen und ihren Derivaten. Bevorzugt eingesetzt werden Triazinderivate. Besonders bevorzugt wird Melamin ($C_1$).

Komponente D

Bei der Komponente D der erfindungsgemäßen Formmasse handelt es sich um organische und anorganische Phosphor enthaltende Verbindungen, in denen der Phosphor die Wertigkeitsstufe - 3 bis + 5 besitzt.

Unter der Wertigkeitsstufe soll der Begriff "Oxidationsstufe" verstanden werden, für den noch andere Begriffe wie Oxidationszahl, Ladungszahl und ähnliche verwendet werden. Sie sind in dem Lehrbuch der Anorganischen Chemie von A.F. Hollemann und E. Wiberg, Walter de Gruyter und Co. (1964, 57. bis 70. Auflage), Seite 166 bis 177, wiedergegeben.

Phosphorverbindungen der Wertigkeitsstufen - 3 bis + 5 leiten sich von Phosphin (- 3), Diphosphin (- 2), Phosphinoxid (- 1), elementarem Phosphor (± 0), hypophosphoriger Säure (+ 1), phosphoriger Säure (+ 3), Hypodiphosphorsäure (+ 4) und Phosphorsäure (+ 5) ab.

Beispiele für Phosphorverbindungen der Phosphin-Klasse, die die Wertigkeitsstufe - 3 aufweisen, sind aromatische Phosphine wie Triphenylphosphin, Tritolylphosphin, Trinonylphosphin, Trinaphthylphosphin u.a. Besonders geeignet ist Triphenylphosphin.

Beispiele für Phosphorverbindungen der Diphosphinklasse, die die Wertigkeitsstufe - 2 aufweisen, sind Tetraphenyldiphosphin, Tetranaphthyldiphosphin u.a. Besonders geeignet ist Tetranaphthyldiphosphin.

Phosphorverbindungen der Wertigkeitsstufe - 1 leiten sich vom Phosphinoxid ab. Beispiele sind Triphenylphosphinoxid, Tritolylphosphinoxid, Trinonylphosphinoxid, Trinaphthylphosphinoxid. Bevorzugt ist Triphenylphosphinoxid.

Phosphor der Wertigkeitsstufe ± 0 ist der elementare Phosphor. In Frage kommen roter und schwarzer Phosphor. Bevorzugt ist roter Phosphor.

Phosphorverbindungen der "Oxidationsstufe" + 1 sind z.B. Hypophosphite. Sie können Salzcharakter haben oder rein organischer Natur sein. Die Salze enthalten Kationen der Elemente aus der I., II. und III. Hauptgruppe und der I bis VIII. Nebengruppen des periodischen Systems (s. Lehrbuch "Anorganische Chemie" von F.A. Cotton, G. Wilkinson, Verlag Chemie (1967)). Beispiele sind Calciumhypophosphit und Magnesiumhypophosphit. Des weiteren kommen Doppelhypophosphite mit der Struktur $CeMe(H_2PO_2)_6$ in Frage, wobei Me = Erbium, Thallium, Ytterbium und Lutetium sein kann. Es können auch komplexe Hypophosphite verwendet werden, wie beispielsweise $Me[Zr(H_2PO_2)_6]$, $Me[Hf(H_2PO_2)_6]$, wobei Me =

Magnesium, Calcium, Mangan, Cobalt, Nickel, Eisen, Zink und Cadmium sein kann.

Neben diesen anorganischen Hypophosphiten kommen auch organische Hypophosphite in Frage. Geeignet sind z.B. Cellulosehypophosphitester, Polyvinylalkoholhypophosphitester, Ester der hypophosphorigen Säure mit Diolen, wie z.B. von 1,10-Dodecyldiol. Auch substituierte Phosphinsäuren und deren Anhydride wie z.B. Diphenylphosphinsäure können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid, Naphthylphenylphosphinsäureanhydrid oder Phenylmethylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykolbis-(diphenylphosphinsäure)-ester.

Phosphorverbindungen der Oxidationsstufe + 3 leiten sich von der phosphorigen Säure ab. Beispiele sind in den US-PS 30 90 799 und 3 141 032 beschrieben. Besonders geeignet sind cyclische Phosphonate wie z.B.

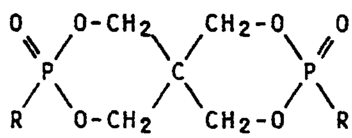

mit R = $CH_3$ und $C_6H_5$, die sich vom Pentaerythrit ableiten,

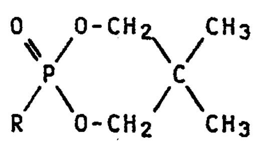

mit R = $CH_3$ und $C_6H_5$, die sich vom Neopentylglykol ableiten und

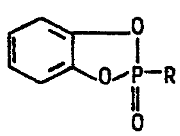

mit R = $CH_3$ und $C_6H_5$, die sich vom Brenzkatechin ableiten.

Ferner ist Phosphor der Wertigkeitsstufe + 3 in Triaryl(alkyl)phosphiten, wie z.B. Triphenylphosphit, Tris(nonylphenyl)phosphit, Tris(2,4-di-tert.-butylphenyl)phosphit oder Phenyldidecylphosphit u.a. enthalten. Es können aber auch Diphosphite, wie z.B. Propylenglykol-1,2-bis(diphenyl-phosphit) oder cyclische Phosphite, wie

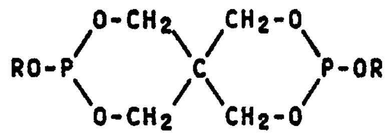

mit R = $CH_3$ und $C_6H_5$, die sich vom Pentaerythrit ableiten,

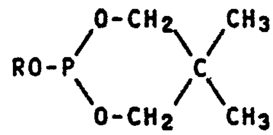

mit R = $CH_3$ und $C_6H_5$, die sich vom Neopentylglykol ableiten und

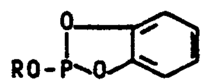

mit R = $CH_3$ und $C_6H_5$, die sich vom Brenzkatechin ableiten in Frage.

Ganz besonders bevorzugt werden Methanphosphonsäureneopentylester, Methylneopentylphosphit sowie Dimethylpentaerythritdiphosphonat und -phosphit.

Als Phosphorverbindungen der Oxidationsstufe + 4 kommen vor allem Hypodiphosphate, wie z.B. Tetraphenylhypodiphosphat oder Bisneopentylhypodiphosphat

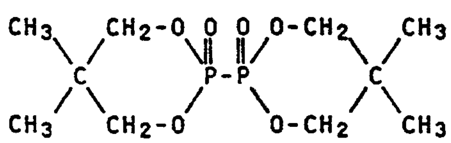

Bisneopentylhypodiphosphat

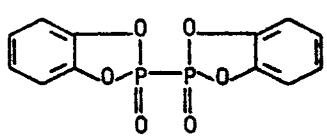

Bisbrenzkatechinhypodiphosphat

in Betracht. Bevorzugt wird Bisneopentylhypodiphophat.

Als Phosphorverbindungen der Oxidationsstufe + 5 kommen vor allem alkyl- und arylsubstituierte Phosphate in Betracht. Beispiele sind Phenylbisdodecylphosphat, Phenylneopentylphosphat, Phenylethylhydrogenphosphat, Phenyl-bis(3,5,5-trimethylhexyl)phosphat, Ethyldiphenylphosphat, 2-Ethylhexyl-di(tolyl)phosphat, Diphenylhydrogenphosphat, Bis(2-ethylhexyl)-p-tolylphosphat, Tritolylphosphat, Bis(2-ethylhexyl)-phenylphosphat, Dinonylphenylphosphat, Phenylmethylhydrogenphosphat, Di(dodecyl)-p-tolylphosphat, Tricresylphosphat, Triphenylphosphat, Dibutylphenylphosphat, p-Tolyl-bis(2,5,5-trimethylhexyl)phosphat, 2-Ethylhexyldiphenylphosphat. Besonders geeignet sind Phosphorverbindungen, bei denen jeder Rest ein Aryloxi-Rest ist. Ganz besonders geeignet ist dabei Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymere, organische Phosphorverbindungen mit Phosphor in der Polymerkette entstehen beispielsweise bei der Herstellung von pentacyclischen, ungesättigten Phosphindihalogeniden, wie es beispielsweise in der DE-OS 20 36 173 beschrieben ist. Das Molekulargewicht, gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe - 1.

Ferner können anorganische Koordinationspolymere von Aryl(Alkyl)-phosphinsäuren, wie z.B. Poly[natrium(I)-methylphenylphosphinat], Poly-[Zn(II)-dibutyl-co-dioctylphosphinat], Poly[Al(III)-tris(diphenylphosphinat)], eingesetzt werden. Ihre Herstellung wird in DE-OS 31 40 520 angegeben. Der Phosphor besitzt die Oxidationszahl + 1.

Weiterhin können solche polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbisphenol-A oder 1,4'-Dihydroxy-diphenylsulfon entstehen (vgl. US 3 719 272 und W. Sørensen und T.W. Campbell, präparative Methoden der Polymerenchemie, Verlag Chemie, Weinheim, 1962, Seite 123). Die inhärenten Viskositäten dieser Polymere sollen in einem Bereich von

$$\frac{\ln \eta_{rel}}{c} = 0{,}01 \text{ bis } 0{,}4$$

vorzugsweise im Bereich von

$$\frac{\ln \eta_{rel}}{c} = 0{,}03 \text{ bis } 0{,}2,$$

liegen.

Weitere polymere Phosphorverbindungen, die in den erfindungsgemäßen Polymerisaten enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Org. Phosphorverbindungen Teil II (1963). In Frage kommt aber auch das anorganische Poly(ammoniumphosphat).

Es können aber auch oligomere Pentaerythritphosphite, -phosphate und -phosphonate gemäß EP-PS 8 486 angewendet werden.

Die Aufzählung dient der Illustration der Erfindung und beinhaltet keine Einschränkung.

Ganz besonders bevorzugt zum Einsatz gelangen Triphenylphosphinoxid, Triphenylphosphat, Dimethylpentaerythritdiphosphonat und Methanphosphonsäureneopentylester und Mobil Antiblaze 19$^{R}$.

Komponente E

Bei der Komponente E handelt es sich um Stoffe, welche als Stabilisatoren oder Antioxidantien bezeichnet werden. Zu diesen beiden Begriffen siehe

G. Scott in Pure and Applied Chemistry, Band 55, Seite 1615 (1983),
J. Pospisil in Advances in Polymer Science, Band 36, Seite 70 (1980) und
K. Schwarzenbach in "Kunststoffadditive", 2. Ausgabe, Editoren R. Gächter und H. Müller, Hanser Verlag, München, 1983, Seite 1.

Als Antioxidantien einsetzbare Verbindungen stammen aus den Klassen der sterisch gehinderten Phenole, Phosphite, Diphenylamine, Phenylendiamine, sterisch gehinderten Amine und Thioverbindungen.

Sie sind in den üblichen Einsatzkonzentrationen von 0,001 bis 2 Gew.% in der Lage thermoplastische Harze bei der Verarbeitung bei höheren Temperaturen vor dem thermischen und thermooxidativen Abbau zu schützen. Neuerdings wurde gefunden, daß phenolische Antoxidantien aus der Klasse der sterisch gehinderten Phenole, in Kombination mit Bromflammschutzmitteln und Antimonoxid, bei der Anwendung unüblich hoher Konzentrationen einen Flammschutzeffekt besitzen. Siehe dazu deutsche Patentanmeldung P 34 45 413.6 (O.Z. 0050/37493).

Wie Vergleichsversuche ergeben haben, können phenolische Antioxidantien in den halogenfreien Flammschutzmittelsystemen gemäß (2) die Novolakkomponente nicht ersetzen. Es war daher um so mehr überraschend, daß phenolische Antioxidantien in der erfindungsgemäßen Formmasse einen Flammschutzeffekt aufweisen.

Geeignete Antioxidantien sind insbesondere die vorstehend erwähnten Handelsprodukte; ganz besonders gut geeignet ist ®Wingstay L von Goodyear. Dieses stellt eine Mischung von oligomeren Phenolen der Struktur

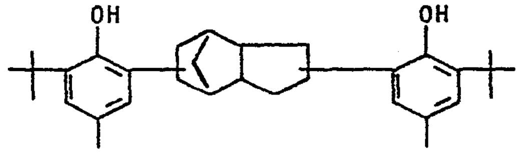

und

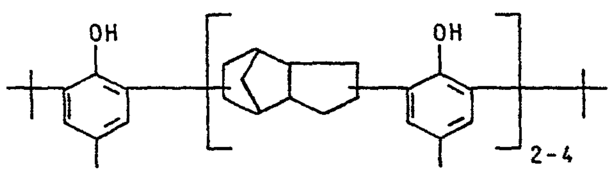

und einem mittleren Molekulargewicht von 600 bis 700 dar.

Komponente F

Die erfindungsgemäße Formmasse kann gegebenenfalls übliche Zusatzstoffe enthalten. Als Zusatzstoffe kommen bekannte und bewährte Stabilisatoren außer den unter D genannten Antioxidantien, wie organische Phosphite in Betracht, die in üblichen Mengen von jeweils 0,01 bis 0,5 Gew.-Teilen, bezogen auf die Formmasse A, B, C, D und E eingesetzt werden. Ferner können Schwefel und/oder Schwefel enthaltende Stabilisatoren wie Dithiocarbamatkomplexe, Xantogensäuresalze, Thiazole und Zinksalze von Mercaptobenzimidazolen in üblichen Mengen von jeweils 0,01 bis 0,5 Gew.%, bezogen auf die Gesamtmischung eingesetzt werden.

Ferner sind anwendbar Füllstoffe, Farbpigmente, Gleitmittel, Weichmacher, Antistatika oder Treibmittel, in üblichen, dem Fachmann bekannten Mengen. Die Einarbeitung der erfindungsgemäßen flammhemmenden Masse sowie der eventuell verwendeten Zusatzstoffe kann nach einem geeigneten und bekannten Mischverfahren, z.B. in Extrudern, Knetern oder Walzen erfolgen.

Die Komponenten B, C, D und E der erfindungsgemäßen, flammhemmenden Masse können in Form von Pulvern oder in Form einer pulverisierten Mischung als Konzentrat in den (gewünschten) Thermoplasten (Komponente A) eingearbeitet werden. Dieses Konzentrat kann in einem weiteren Teil des Thermoplasten eingebracht werden, um die beabsichtigte Zusammensetzung zu erzielen.

Die erfindungsgemäße Formmasse kann durch Spritzgießen oder Strangpressen zu selbstverlöschenden Formkörpern oder Profilen verarbeitet werden.

Die erfindungsgemäße Formmasse besitzt neben der Eigenschaft der Selbstverlöschung eine gute Wärmeformbeständigkeit und eine gute Fließfähigkeit und kein Abtropfen nach der Beflammung.

Die Formmasse zeichnet sich insbesondere dadurch aus, daß sich Styrol-Polymerisate und schlagzäh modifizierte Styrolpolymerisate mit praktikablen Mengen halogenfrei flammfest ausrüsten lassen. Das Zustandekommen des flammhemmenden Effektes durch das System B+C+D+E bei den genannten Thermoplasten ist überraschend, weil bekannte flammhemmende Systeme bei den genannten Thermoplasten keine Wirkung aufweisen und weil insbesondere die Einzelkomponenten B, C, D oder E der erfindungsgemäßen Formmasse selbst in für die Praxis prohibitiv hohen Zuschlagsmengen keinerlei flammhemmende Wirkung zeigen.

Die in den Beispielen und Vergleichsversuchen erwähnten Brandtests wurden wie folgt durchgeführt:

1. Die Flammschutzprüfung erfolgt im vertikalen Brandtest nach den Vorschriften der Underwriter Laboratories zwecks Einordnung in eine der Brandklassen UL 94 V0, UL 94 V1 oder UL 94 V2.

   Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 Sek. Zeitdauer mit einer offenen Flamme (Höhe 19 mm) nicht länger als 10 Sek. nachbrennen. Die Summe der Nachbrennzeiten bei 10 Beflammungen von 5 Proben darf nicht größer sein als 50 Sek. Es darf kein brennendes Abtropfen,

vollständiges Abbrennen oder ein Nachglühen von länger als 30 Sek. erfolgen. Die Einstufung in die Brandklasse UL 94 V1 erfordert, daß die Nachbrennzeiten nicht länger als 30 Sek. sind und daß die Summe der Nachbrennzeiten von 10 Beflammungen von 5 Proben nicht größer nicht größer als 250 Sek. ist. Das Nachglühen darf nie länger als 60 Sek. dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brenndem Abtropfen kommt.

2. Die Wärmeformbeständigkeit nach Vicat wurde nach DIN 53 460 in (°C) bestimmt.

3. Die Kerbschlagzähigkeit $a_K$ wurde bei 23°C nach DIN 53 453 in (kJ/m²) bestimmt.

Für die Durchführung von Versuchen für die Beispiele und die Vergleichsversuche wurden folgende Produkte verwendet:

Komponente A:

$A_n$: unterschiedliche Abmischungen aus

$A_1$: einem Styrol/Acrylnitril-Copolymerisat (= SAN) mit 35 % Acrylnitril, Viskositätszahl VZ = 80 (0,5 %ig in Dimethylformamid bei 23°C) und

$A_2$: einem Profpmischpolymerisat, nämlich 60 % Poly(butadien)kautschuk, gepfropft mit 40 % Styrol/Acrylnitril im Verhältnis (65/35).

Komponente B:

Für die Herstellung der Komponente B wurde zunächst ein gemischter Novolak [=($N_{26}$)] hergestellt.

Novolak ($N_{26}$)

63,18 kg p-Kresol, 82,62 kg m-Kresol, 340,2 kg o-Kresol und 320,4 kg Formalin (40 %ig in Wasser), 10 kg Oxalsäure und 35 kg $CH_3OH$ werden 24 Stunden lang bei 95 bis 97°C gerührt. Nach 24 Stunden wird die obere, wäßrige Phase abgehebert und die untere Phase mit 200 l Wasser gewaschen. Die untere, produkthaltige Phase wird durch Wasserdampfdestillation von überschüssigen Phenolen befreit, und anschließend wird das Produkt im Wasserstrahlvakuum getrocknet, und die Oxalsäure durch Erhitzen auf 160°C

im Feinvakuum zersetzt. Die verbleibende Schmelze wird abgelassen, abgekühlt, zerkleinert und gemahlen.

Ausbeute: 400 kg
Molgewicht: (dampfdruckosmometrisch in Aceton): 1100
o-o-Verknüpfungen laut $^{13}C$-NMR: 62 %;
o-p-Verknüpfungen laut $^{13}C$-NMR: 23 %;
p-p-Verknüpfungen laut $^{13}C$-NMR: 15 %;

Herstellung von $B_1$

Komponente ($b_1$) auf der Basis von Novolak ($N_{26}$), Modifizierungsgrad: 25 % der phenolischen OH-Gruppen.

Zu einer Lösung aus 10 kg Novolak und 40 g Hydrochinonmonomethylether ($N_{26}$) (≙ 83,3 Äquivalenten phenolischer OH-Gruppen) in 3,8 kg Acrylnitril werden unter Rühren bei 80°C im Laufe von 5 Stunden 2,93 kg Methacrylsäureglycidylester (≙ einem 25 %igen Umsatz der phenolischen OH-Gruppen) und 30 g Triphenylphosphin zudosiert. Es wird weitere 6 Stunden bei 80°C gerührt, mit 8,9 kg Styrol versetzt und nach dem Abkühlen von den geringen Anteilen an unlöslichen Produkten abfiltriert.

Es resultiert eine homogene Lösung mit einem Feststoffgehalt (Vinylesterharz) von 49,9 %.

Die vorstehend genannte Lösung von Komponente ($b_1$) in Styrol/Acrylnitril (70/30) wird mit $Na_2S_2O_8$ als Initiator bei 160°C einer Massepolymerisation unterworfen. Es resultiert ein teilvernetztes, homogenes, klares Harz, das in Dimethylformamid partiell löslich ist. Ausbeute > 95 % ($B_1$).

Herstellung von $B_2$

Komponente ($b_1$) auf der Basis von Novolak ($N_{26}$), Modifizierungsgrad: 50 % der phenolischen OH-Gruppen.

Zu einer Lösung aus 10 kg Novolak und 40 g Hydrochinonmonomethylether ($N_{26}$) (≙ 83,3 Äquivalenten phenolischer OH-Gruppen) in 4,6 kg Acrylnitril werden unter Rühren bei 80°C im Laufe von 5 Stunden 5,87 kg Methacrylsäureglycidylester (≙ einem 50 %igen Umsatz der phenolischen OH-Gruppen) und 30 g Triphenylphosphin zudosiert. Es wird weitere 7 Stunden bei 80°C gerührt, mit 10,8 kg Styrol versetzt und nach dem Abkühlen von den geringen Anteilen an unlöslichen Produkten abfiltriert.

Es resultiert eine homogene Lösung mit einem Feststoffgehalt (Vinylesterharz) von 50,1 %.

Die vorstehend beschriebene Lösung von Komponente ($b_1$) in Styrol/Acrylnitril (70/30) wird nach dem in unter Herstellung von $B_1$ aufgeführten Verfahren umgesetzt zu einem teilvernetzten, homogenen, klaren Harz, das in Dimethylformamid partiell löslich ist. Ausbeute > 98 % ($B_2$).

$^{B}$Vergl.

Vergleichsprobe

22,5 kg Novolak ($N_{26}$) (≙ 187,5 Mol) werden mit 93,75 Mol Propylenoxid nach EP-PS 71 167 umgesetzt zu einem Epoxidharz, welches anschließend mit 93,75 Mol Methacrylsäure verestert wurde. Das resultierende Vinylesterharz (32,4 kg) war nicht vollständig in Styrol/Acrylnitril (70/30) u.a. Styrol/Acrylnitril-Mischungen löslich. Die anschließende radikalische Massepolymerisation des Vinylesterharzes (2,5 kg ≙ 6,8 Mole an Doppelbindungen enthaltenden Gruppen) mit 2,6 kg Styrol/Acrylnitril (70/30) ergab ein inhomogenes, dunkelgefärbtes Produkt, das für eine Anwendung nicht geeignet war.

Beispiele 1 bis 6 und Vergleichsversuche A bis K

Die Erfindung wird nachstehend anhand der Beispiele in Tabelle 2 näher erläutert. Die in den Beispielen und Versuchen genannten Prozente beziehen sich, sofern nichts anderes vermerkt ist, auf das Gewicht der jeweils betrachteten Gesamtmischung.

In der Tabelle 2 werden folgende Abkürzungen verwendet:

$A_1$ = SAN mit 35 % Acrylnitril,

$A_2$ = Propfmischpolymerisat aus 60 Gew.% Poly(butadien)kautschuk, gepfropft mit 40 Gew.% Styrol/Acrylnitril (65/35),

$B_1$ = Pfropfcopolymer aus 50 Gew.% Novolak ($N_{26}$), dessen phenolische OH-Gruppen zu 25 % (Σ der phenolischen OH-Gruppen = 100 %) mit Methacrylsäureglycidylester modifiziert worden sind, und 50 Gew.% Styrol/Acrylnitril (70/30)-Copolymer,

$B_2$ = Pfropfcopolymer aus 50 Gew.% Novolak ($N_{26}$), dessen phenolische OH-Gruppen zu 50 % (Σ der phenolischen OH-Gruppen = 100 %) mit

Methacrylsäureglycidylester modifiziert worden sind, und 50 Gew.% Styrol/Acrylnitril (70/30)-Copolymer,

$C_1$ = Melamin;

$D_1$ = Triphenylphosphinoxid;

$D_2$ = Triphenylphosphat;

$D_3$ = ®Mobil Antiblaze 19;

$D_4$ = Methanphosphonsäureneopentylester; hergestellt nach der Lehre der deutschen Patentanmeldung P 34 32 574.3 (O.Z. 0050/37300) (Fp. 121-123°C),

$D_5$ = Dimethylpentaerythritdiphosphonat; hergestellt nach GB-PS 2 083 042 (Fp. 236-242°C),

E = Wingstay L von Goodyear;

$B_{vergl.}$ = Vergleichsprobe eines Vinylesterharzes;

($N_{26}$) = Novolak aus 70 % o-, 17 % m- und 13 % p-Kresol;

Die in der Tabelle 2 angegebenen Mengen in Gewichtsprozent an Komponenten B bis E wurden in einem Fluidmischer der Firma Henschel, Kassel, bei 40°C gemischt. Das Gemisch aus diesen Komponenten wurde dann mit den in der Tabelle 2 angegebenen Mengen (in Gewichtsprozent) an thermoplastischen Harzen (Komponente $A_1$ und $A_2$) auf einem Extruder bei 200 bis 260°C aufgeschmolzen, homogenisiert und anschließend granuliert.

Vom Granulat wurden die entsprechenden Prüfkörper spritzgegossen.

0192214

Tabelle 2: Beispiele und Vergleichsversuche

| Beispiel Nr | A: $A_1$ | A: $A_2$ | B | C | D | E | Einstufung nach UL 94 1/8" | Einstufung nach UL 94 1/16" | Wärmeformbeständigkeit Vicat (°C) | Kerbschlagzähigkeit (kJ/m²) |
|---|---|---|---|---|---|---|---|---|---|---|
| 1 | 26 | 23 | $B_1$, 32 | $C_1$, 5 | $D_1$, 8 | 6 | VO | VO | 100 | 4 |
| 2 | 30 | 20 | $B_2$, 35 | - | $D_4$, 7 | 8 | VO | V1 | 97 | 6 |
| 3 | 24 | 25 | $B_1$, 30 | $C_1$, 5 | $D_5$, 6 | 10 | VO | VO | 98 | 4 |
| 4 | 12,4 | 24,6 | $B_2$, 40 | $C_1$, 3 | $D_2$, 10 | 10 | VO | V1 | 93 | 5 |
| 5 | 14,7 | 23,9 | $B_1$, 30 | - | $D_2$, 15 | 11 | VO | VO | 90 | 7 |
| 6 | 16 | 27 | $B_1$, 33 | $C_1$, 6 | $D_3$, 10 | 8 | VO | V1 | 91 | 3 |
| Vergleiche | | | | | | | | | | |
| A | 50 | 20 | $N_{28}$, 10 | $C_1$, 10 | $D_4$, 10 | - | VO | VO | 76 | 1 |
| B | 60 | 20 | - | - | $D_2$, 10 | 10 | keine | keine | 83 | 4,7 |
| C | 60 | 20 | - | - | $D_4$, 10 | 10 | keine | keine | 79 | 2,8 |
| D | 50 | 20 | - | $C_1$, 10 | $D_2$, 10 | 10 | keine | keine | 80 | 1,7 |
| E | 50 | 20 | - | $C_1$, 10 | $D_4$, 10 | 10 | keine | keine | 77 | 1,8 |
| F | 21,7 | 43,3 | $N_{26}$, 10 | $C_1$, 10 | $D_4$, 15 | - | keine | keine | 56 | 1,2 |
| G | 51 | 20 | $N_{26}$, 15 | - | $D_5$, 8 | 6 | V2 | keine | 93 | 1,5 |
| H | 45 | 20 | $N_{26}$, 15 | $C_1$, 5 | $D_4$, 8 | 7 | V1 | keine | 81 | 1,5 |
| I | 27 | 23 | $B_1$, 50 | - | - | - | keine | keine | 100 | 7 |
| J | 17 | 23 | $B_1$, 50 | $C_1$, 10 | - | - | keine | keine | 101 | 2 |
| K | 12 | 23 | $B_2$, 50 | - | - | 15 | keine | keine | 98 | 6 |

0192214

## Patentansprüche

1. Halogenfreie, selbstverlöschende thermoplastische Formmasse, bestehend aus, jeweils bezogen auf die Formmasse aus (A), (B), (C), (D) und (E),

(A) mindestens einem halogenfreien thermoplastischen Harz in einem Anteil von 30 bis 95 Gew.%,

(B) 1 bis 70 Gew.% mindestens eines Phenol-Aldehyd-Harzes (Novolak),

(C) 0 bis 50 Gew.% mindestens einer Stickstoff enthaltenden organischen Verbindung,

(D) 1 bis 50 Gew.% mindestens einer Phosphor enthaltenden Verbindung,

dadurch gekennzeichnet, daß es sich bei dem Novolak (B) um einen solchen handelt, der durch Umsetzung mit mindestens einer eine ethylenische Doppelbindung aufweisenden Gruppe modifiziert worden ist und wobei ferner der so modifizierte Novolak in an sich bekannter Weise mit einem Gemisch aus mindestens einem monovinylaromatischen Monomeren mit 6 bis 9 C-Atomen und Acrylnitril einer Pfropfpolymerisation unterworfen wird und daß die Formmasse außerdem

(E) 3 bis 15 Gew.% mindestens eines phenolischen Antioxidans aufweist.

2. Thermoplastische Formmasse gemäß Anspruch 1, dadurch gekennzeichnet, daß als Komponente (B) ein Phenol-Aldehyd-Harz verwendet wird, welches aufgebaut ist aus, jeweils bezogen auf B,

($b_1$) 10 bis 90 Gew.%, des modifizierten Novolaks als Pfropfgrundlage

und

($b_2$) 90 bis 10 Gew.%, mindestens eines Copolymerisates aus einem vinylaromatischen Monomeren und Acrylnitril im Gewichtsverhältnis 60:40 bis 90:10 als Pfropfhülle.

3. Halogenfreie, selbstverlöschende thermoplastische Formmasse, bestehend aus, jeweils bezogen auf die Formmasse aus (A), (B), (C), (D) und (E),

(A) mindestens einem halogenfreien thermoplastischen Harz in einem Anteil von 30 bis 95 Gew.%, auf Basis eines Mischpolymerisates, das bezogen auf A

$a_1$) 1 bis 40 Gew.% eines Elastomeren

$a_2$) 5 bis 40 Gew.% eines darauf gepfropften Copolymerisates und

$a_3$) 20 bis 94 Gew.% eines Copolymerisates, Hartmatrix, enthält, wobei das Pfropfmischpolymerisat aus $a_1$) und $a_2$) in $a_3$ gleichmäßig verteilt ist,

(B) 1 bis 70 Gew.% mindestens eines Phenol-Aldehyd-Harzes (Novolak),

(C) 0 bis 50 Gew.% mindestens einer Stickstoff enthaltenden organischen Verbindung,

(D) 1 bis 50 Gew.% mindestens einer Phosphor enthaltenden Verbindung,

dadurch gekennzeichnet, daß es sich bei dem Novolak (B) um einen solchen handelt, der durch Umsetzung mit mindestens einer eine ethylenische Doppelbindung aufweisenden Gruppe modifiziert worden ist und wobei ferner der so modifizierte Novolak in an sich bekannter Weise mit einem Gemisch aus mindestens einem monovinylaromatischen Monomeren mit 6 bis 9 C-Atomen und Acrylnitril einer Pfropfpolymerisation unterworfen wird und daß die Formmasse außerdem

(E) 3 bis 15 Gew.% mindestens eines phenolischen Antioxidans aufweist.

4. Halogenfreie, selbstverlöschende thermoplastische Formmasse, bestehend aus, jeweils bezogen auf die Formmasse aus (A), (B), (C), (D) und (E),

(A) mindestens einem halogenfreien thermoplastischen Harz in einem Anteil von 30 bis 86 Gew.%, auf Basis eines Mischpolymerisates, das bezogen auf A

$a_1$) 10 bis 30 Gew.% eines Elastomeren

$a_2$) 5 bis 30 Gew.% eines darauf gepfropften Copolymerisates und

$a_3$) 40 bis 85 Gew.% eines Copolymerisates, Hartmatrix, enthält, wobei das Pfropfmischpolymerisat aus $a_1$) und $a_2$) in $a_3$ gleichmäßig verteilt ist,

(B) 5 bis 40 Gew.% mindestens eines Phenol-Aldehyd-Harzes (Novolak),

(C) 5 bis 30 Gew.% mindestens einer Stickstoff enthaltenden organischen Verbindung,

(D) 1 bis 50 Gew.% mindestens einer Phosphor enthaltenden Verbindung,

<u>dadurch gekennzeichnet</u>, daß es sich bei dem Novolak (B) um einen solchen handelt, der durch Umsetzung mit mindestens einer eine ethylenische Doppelbindung aufweisenden Gruppe modifiziert worden ist und wobei ferner der so modifizierte Novolak in an sich bekannter Weise mit einem Gemisch aus mindestens einem monovinylaromatischen Monomeren mit 6 bis 9 C-Atomen und Acrylnitril einer Pfropfpolymerisation unterworfen wird und daß die Formmasse außerdem

(E) 4 bis 11 Gew.% mindestens eines phenolischen Antioxidans aufweist.

5. Thermoplastische Formmasse gemäß Anspruch 3, <u>dadurch gekennzeichnet</u>, daß der modifizierte Novolak mindestens eine über ein Sauerstoffatom des Novolaks gebundene Gruppe der allgemeinen Stuktur

$$-X-Y-\overset{\displaystyle Z}{\overset{|}{C}}=CH_2 \qquad \text{I,}$$

aufweist, in der stehen für

X: = $-CHQ^1-$[mit $Q^1$ = H, $C_1$-$C_4$-Alkyl],

$$\overset{\displaystyle O}{\overset{\|}{-C-}}, \qquad \overset{\displaystyle O}{\overset{\|}{-C}}-NH-,$$

$-SiQ^2_2-$, $-PQ^2_2-$, $-BQ^2-$ [mit $Q^2$ = $C_1$-$C_4$-Alkyl, $C_6$-$C_{10}$-Aryl, $C_1$-$C_4$-Alkoxi, $C_6$-$C_{10}$-Aryloxi];

Z: = H, $C_1$-$C_4$-Alkyl, $C_4$-$C_6$-Cycloalkyl, $C_6$-$C_{10}$-Aryl,

Y: = einen zweibindigen organischen Rest, ausgewählt aus den Verbindungsklassen der Alkyle, Cycloalkyle, Aryle, welcher ggf. noch weitere funktionelle Gruppen trägt.

6. Formmasse nach Anspruch 4, dadurch gekennzeichnet, daß die allgemeine Struktur I steht für einen 2-Hydroxi-5-oxo-6-methyl-4-oxahept-6-en-1-yl-Rest.

7. Formmasse nach den Ansprüchen 1 oder 3, dadurch gekennzeichnet, daß zur Darstellung des modifizierten Novolaks ein Novolak in Lösung oder Schmelze umgesetzt wird mit Methacrylsäureglycidylester.

8. Thermoplastische Formmasse gemäß Anspruch 1, dadurch gekennzeichnet, daß als phenolisches Antioxidans (Komponente E) ein Gemisch aus

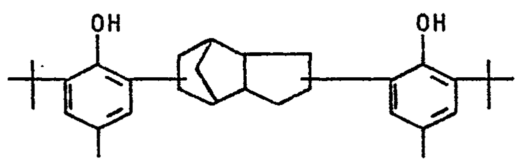

und

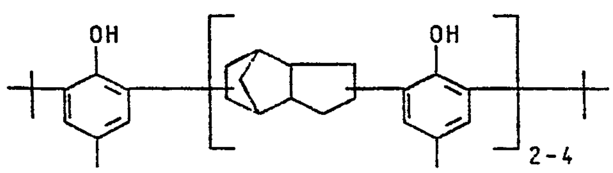

eingesetzt wird.

9. Verwendung von Formmassen gemäß Anspruch 1 zur Herstellung von Formteilen.

10. Formteile aus Formmassen gemäß Anspruch 1.